# EUROPEAN PATENT APPLICATION

(11) **EP 1 202 142 A1**
(43) Date of publication of application: **02.05.2002**
(21) Application number: 00810988.6
(22) Date of filing: 25.10.2000
(51) Int. Cl.: G05B 19/4065, G05B 13/02, G05B 23/02

(54) **Maintenance planning system and method**

(71) Applicant: ABB RESEARCH LTD., 8050 Zürich (CH)
(72) Inventor: Kostic, Tatjana, Dr., 5443 Niederrohrdorf (CH); Werner, Thomas, 5404 Dättwil (CH); Vetter, Claus, Dr., 5405 Baden-Dättwil (CH)
(74) Representative: ABB Patent Attorneys

(57) **Abstract**

In a method and system for maintenance planning for a technical system, where the technical system (10) comprises a plurality of substations (1), each of which comprises a plurality of devices (2,3,4,5,6) and the method determines a maintenance schedule that specifies when each of the plurality of substations (1) and devices (2,3,4,5,6) should be involved in a maintenance task, the method comprises the steps of
a) determining functional dependencies among substations (1) and/or devices (2,3,4,5,6), and
b) coordinating maintenance tasks by determining the maintenance schedule such that it minimizes a cost function that comprises costs representing at least one time period during which at least a part of the technical system (10) is inoperable due to maintenance activities, and where said costs are determined according to the functional dependencies.

## Description

### Field of the Invention

The invention relates to the field of maintenance planning, in particular to a method for maintenance planning and a maintenance planning system as described in the preamble of claim 1 and 8, and to a computer program product as described in the preamble of claim 10.

### Background of the Invention

Existing maintenance support systems are known as computerized maintenance management systems (CMMS). CMMS are tools that help in planning and scheduling equipment maintenance and asset management for technical assets to meet the needs of modern plants and facilities. Using information about system components, CMMS software enables an engineer to schedule maintenance, repairs, and inspections of such components. CMMS software notifies operations personnel when maintenance or other action is required.

Such a CMMS is described in US-A-6 006 171. In addition to just maintenance related information, it also takes into account operational information such as sensor and alarm data provided by process control software. The information is displayed to an operator in order to support the scheduling of maintenance activities. One goal of such a system is to provide the support for preventive maintenance before an asset or device fails. Another goal is to minimize maintenance activities when a device is expected to be in good condition - in contrast to scheduling maintenance activities at regular intervals, without taking the condition of the device into account.

### Description of the Invention

It is an object of the invention to provide a method for maintenance planning and a maintenance planning system that further improve the quality and efficiency of generated maintenance plans.

This object is achieved by a method for maintenance planning and a maintenance planning system according to the claims 1 and 8, and by a computer program product according to claim 10.

In the inventive method for maintenance planning for a technical system, where the technical system comprises a plurality of devices and the method determines a maintenance schedule that specifies when each of the plurality of devices should be involved in a maintenance task, the method comprises the steps of
a) determining functional dependencies between the devices, and
b) coordinating maintenance tasks by determining the maintenance schedule such that it minimizes a cost function that comprises costs representing at least one time period during which at least a part of the technical system is inoperable due to maintenance activities, and where said costs are determined according to the functional dependencies.

In a preferred embodiment of the invention, the cost function comprises, for each of the plurality of devices, maintenance costs, expected costs due to failure of the device, and costs representing a duration during which the device is inoperable

In a preferred embodiment of the invention, the method comprises the steps of
a) determining a first maintenance schedule that, for each of the plurality of devices, specifies when each of the plurality of devices should be involved in a maintenance task,
b) analyzing functional dependencies between the devices, and
c) coordinating maintenance tasks by determining a second maintenance schedule such that it reduces, with respect to the first maintenance schedule, a total time during which at least a part of the technical system is inoperable due to maintenance activities, and where said total time is determined according to the functional dependencies.
   In a preferred embodiment of the invention, the first maintenance schedule is determined by minimizing, individually for each device, a device cost function of the device that comprises maintenance costs and expected costs due to failure of the device.
   In a preferred embodiment of the invention, the second maintenance schedule is determined by minimizing a system cost function that comprises, for each of the plurality of devices, the device cost function and a cost function representing a duration during which the device is inoperable.
   In a preferred embodiment of the invention, the method further comprises the step of
d) displaying a visual representation of the first and second maintenance schedule to a user.

In a preferred embodiment of the invention, the technical system is an electric power network comprising substations which in turn comprise devices, and the functional dependencies among the network elements and substation devices are derived from topological model of both the network and the substations.

A maintenance planning system according to the invention comprises
a) means for analyzing functional dependencies between the devices, and
b) means for coordinating maintenance tasks and determining the maintenance schedule that minimizes a cost function that comprises costs representing at least one time period during which at least a part of the technical system is inoperable due to maintenance activities, and where said costs are determined according to the functional dependencies.

A computer program product according to the invention, when loaded and executed on a computer, executes the method according to the invention.

Further preferred embodiments are evident from the dependent patent claims.

### Brief Description of the Drawings

The subject matter of the invention will be explained in more detail in the following text with reference to preferred exemplary embodiments which are illustrated in the attached drawings, in which:
- Figure 1: schematically shows a structure with a maintenance planning system according to the invention along with related systems; and
- Figure 2: shows a visual representation of a first and second maintenance schedule according to the invention.

The reference symbols used in the drawings, and their meanings, are listed in summary form in the list of reference symbols. In principle, identical parts are provided with the same reference symbols in the figures.

### Detailed Description of Preferred Embodiments

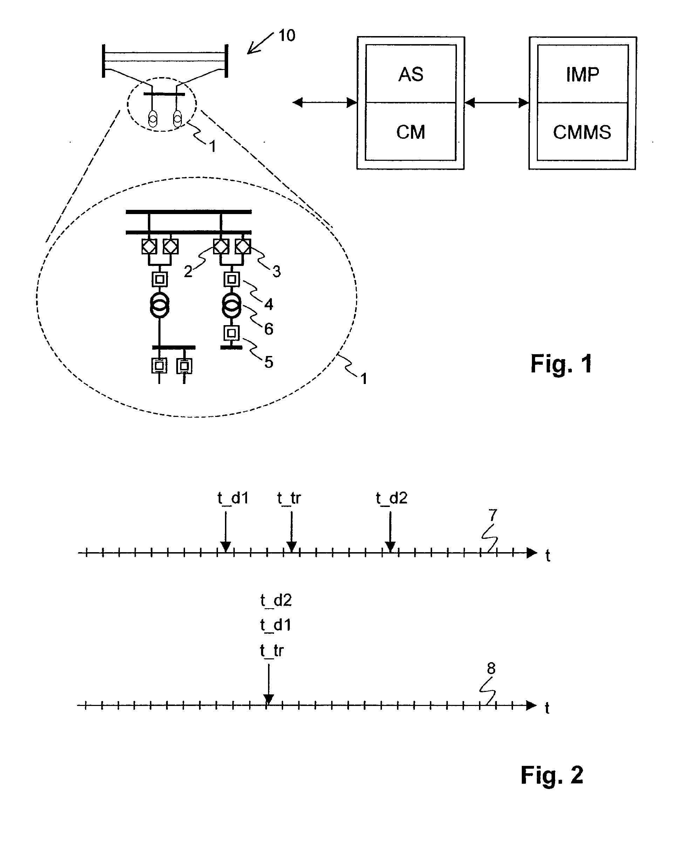

Figure 1 schematically shows a diagram representing a technical system, in this case an electric power network 10, comprising several substations. One substation 1 is shown in detail. It comprises devices such as disconnectors 2,3, circuit breakers 4,5 and a transformer 6. The substation exchanges information with an asset supervision system AS and a condition monitoring system CM. These in turn exchange information with a computerized maintenance management system CMMS that is combined with an improved maintenance planner IMP or maintenance planning system according to the invention.

The asset supervision system AS and the condition monitoring system CM measure sensor values of the network 10, in particular of the substation 1, and provide warnings and alarms related to an estimated condition of the devices 2,3,4,5,6 and other devices that the network 10 comprises.

The computerized maintenance management system CMMS enables an engineer to schedule maintenance activities for the plurality of substations 1 and devices 2,3,4,5,6 according to the state of the art, i.e. it determines a first maintenance schedule that specifies when each of the plurality of substations and the plurality of devices should be involved in a maintenance or revision task. This is done individually for each device, preferably by minimizing a device cost function that takes into account maintenance costs and expected costs due to failure of the device. Scheduling a maintenance activity early increases maintenance costs but decreases a risk of failure and accordingly the expected costs due to failure. Depending on how risks are weighted, the minimization determines the time at which maintenance should take place in order to optimally balance the above conflicting requirements and to minimize expected combined device costs. For example, the optimal instant in time for maintenance for the first disconnector 2 is t_d1, for the second disconnector 3 is t_d2, and for the transformer 6 is t_tr.

Figure 2 shows schematically a first maintenance schedule on an upper time axis 7 and a second maintenance schedule on a lower time axis 8. The second time schedule is determined by the improved maintenance planner IMP according to the invention by analyzing functional dependencies between the transformer 6 and the disconnectors 2,3. A functional dependency between a first and a second device expresses e.g. that the first device can only operate if the second device is operable as well. The analysis of functional dependencies shows that performing maintenance on the first disconnector 2 or second disconnector 3 forces a shutdown of the transformer 6. The first maintenance schedule would therefore cause three separate shutdowns of the transformer. The improved maintenance planner IMP takes into account such interdependencies of maintenance activities or tasks. It coordinates the maintenance tasks for the first and second disconnector 2,3 and the transformer 6 such that a period of time in which the transformer 6 is shut down or inoperable is reduced. This is done preferably by minimizing a system cost function that comprises the device cost function of each of the plurality of devices and also a cost associated with the time during which a device is shutdown.

In the present example, depending on weighting factors of the system cost function, one common point in time is determined on which the transformer 6 and the associated first and second disconnector 2,3 are serviced. The common point in time, shown in the second maintenance schedule on the lower time axis 8 of figure 2, involves an increased cost due to risk of failure when considering the first disconnector 4 alone, and an increased cost due to earlier maintenance when considering the transformer 6 or the second disconnector 3 alone. However, the total decrease in cost more than compensates said separate increases, since the transformer 6 is inoperable for a shorter time. Finding the second maintenance schedule with an optimal system cost involves known methods for nonlinear programming and optimization.

Similar to the above, maintenance of a circuit breaker is coordinated with maintenance of disconnectors connected in series with the circuit breaker.

In a preferred embodiment of the invention, the improved maintenance planner IMP displays a visual representation of the first and second maintenance schedule, similar to the figure 2, to a user. Based on this display, the user can check the underlying risk and cost estimates and possibly adapt a maintenance schedule that is implemented.

In a further preferred embodiment of the invention, there is no separate procedure for determining the first and second maintenance schedule. Rather, a maintenance schedule is determined in a single optimization procedure that minimizes a system cost function.

In another preferred embodiment of the invention, the functional dependencies used in generating the second maintenance schedule are derived from a topological model of the network and substations. The topological model comprises information about how devices are interconnected, similar to information contained in a single-line diagram of the substation 1 as in figure 1. The functional dependencies are generated by rules that define switching sequences in substations. An example of a generic rule would be: "first deenergize the disconnector, then operate it".

A computer program product according to the invention comprises a computer readable medium, having thereon: computer program code means to make, when said program is loaded in a computer, the computer execute a procedure to perform maintenance planning for a technical system 10, where the technical system comprises a plurality of devices 2,3,4,5,6 and the procedure determines a maintenance schedule that specifies when each of the plurality of devices 2,3,4,5,6 should be involved in a maintenance task, characterized in that the procedure performs the steps of
a) determining functional dependencies between the devices 2,3,4,5,6, and
b) coordinating maintenance tasks by determining the maintenance schedule such that it minimizes a cost function that comprises costs representing at least one time period during which at least a part of the technical system 10 is inoperable due to maintenance activities, and where the procedure determines said costs according to the functional dependencies.

The invention has been explained in terms of an electrical substation. It is however applicable to any technical system 10 in which there exist dependencies in the availability of devices, i.e. in which deactivating one device in order to perform maintenance forces a deactivation of other devices. This holds in particular for an electrical network 10 in which the maintenance in one substation can strongly influence the state of the whole network or its regions.

### List of designations

- 1: electrical substation
- 2, 3: disconnector
- 4, 5: circuit breaker
- 6: transformer
- 7: upper time axis
- 8: lower time axis
- 10: technical system, electric power network
- AS: asset supervision system
- CM: condition monitoring system
- CMMS: computerized maintenance management system
- IMP: improved maintenance planner
- t: time
- t_tr: maintenance time for transformer
- t_d1: maintenance time for first disconnector
- t_d2: maintenance time for second disconnector

## Claims

1. Method for maintenance planning for a technical system (10), where the technical system comprises a plurality of devices (2,3,4,5,6) and the method determines a maintenance schedule that specifies when each of the plurality of devices (2,3,4,5,6) should be involved in a maintenance task,
**characterized in that** the method comprises the steps of
a) determining functional dependencies between the devices (2,3,4,5,6), and
b) coordinating maintenance tasks by determining the maintenance schedule such that it minimizes a cost function that comprises costs representing at least one time period during which at least a part of the technical system (10) is inoperable due to maintenance activities, and where said costs are determined according to the functional dependencies.

2. Method according to claim 1, **characterized in that** the cost function comprises, for each of the each of the plurality of devices (2,3,4,5,6), maintenance costs, expected costs due to failure of the device (2,3,4,5,6), and costs representing a duration during which the device (2,3,4,5,6) is inoperable.

3. Method according to claim 1, **characterized in that** the method comprises the steps of
a) determining a first maintenance schedule that, for each of the plurality of devices (2,3,4,5,6), specifies when each of the plurality of devices (2,3,4,5,6) should be involved in a maintenance task,
b) analyzing functional dependencies between the devices (2,3,4,5,6), and
c) coordinating maintenance tasks by determining a second maintenance schedule such that it reduces, with respect to the first maintenance schedule, a total time during which at least a part of the technical system (10) is inoperable due to maintenance activities, and where said total time is determined according to the functional dependencies.

4. Method according to claim 3, **characterized in that** the first maintenance schedule is determined by minimizing, individually for each of the plurality of devices (2,3,4,5,6), a device cost function of the device (2,3,4,5,6) that comprises maintenance costs and expected costs due to failure of the device (2,3,4,5,6).

5. Method according to claim 4, **characterized in that** the second maintenance schedule is determined by minimizing a system cost function that comprises, for each of the plurality of devices (2,3,4,5,6), the device cost function and a cost function representing a duration during which the device (2,3,4,5,6) is inoperable.

6. Method according to claim 5, **characterized in that** the method further comprises the step of
d) displaying a visual representation of the first and second maintenance schedule to a user.

7. Method according to claim 1, **characterized in that** the technical system (10) is an electric power network, comprising substations (1) which in turn comprise devices (2,3,4,5,6), and that the functional dependencies between the devices (2,3,4,5,6) are derived from a topological model of both the network (10) and the substations (1).

8. Maintenance planning system for a technical system, where the technical system comprises a plurality of devices (2,3,4,5,6) and the maintenance planning system comprises means for determining a maintenance schedule that specifies when each of the plurality of devices (2,3,4,5,6) should be involved in a maintenance task,
**characterized in that** the maintenance planning system comprises
a) means for analyzing functional dependencies between the devices (2,3,4,5,6), and
b) means for coordinating maintenance tasks and determining the maintenance schedule that minimizes a cost function that comprises costs representing at least one time period during which at least a part of the technical system (10) is inoperable due to maintenance activities, and where said costs are determined according to the functional dependencies.

9. System according to claim 8, **characterized in that** the cost function comprises, for each of the each of the plurality of devices (2,3,4,5,6), maintenance costs, expected costs due to failure of the device (2,3,4,5,6), and costs representing a duration during which the device (2,3,4,5,6) is inoperable.

10. A computer program product comprising a computer readable medium, having thereon: computer program code means to make, when said program is loaded in a computer, the computer execute a procedure to perform maintenance planning for a technical system (10), where the technical system comprises a plurality of devices (2,3,4,5,6) and the procedure determines a maintenance schedule that specifies when each of the plurality of devices (2,3,4,5,6) should be involved in a maintenance task,
**characterized in that** the procedure performs the steps of
a) determining functional dependencies between the devices (2,3,4,5,6), and
b) coordinating maintenance tasks by determining the maintenance schedule such that it minimizes a cost function that comprises costs representing at least one time period during which at least a part of the technical system (10) is inoperable due to maintenance activities, and where the procedure determines said costs according to the functional dependencies.
